## Europäisches Patentamt
## European Patent Office
## Office européen des brevets

(19)

(11) **EP 0 241 751 B2**

(12) ## NEUE EUROPÄISCHE PATENTSCHRIFT

(45) Veröffentlichungstag und Bekanntmachung des Hinweises auf die Entscheidung über den Einspruch:
**07.11.2001 Patentblatt 2001/45**

(51) Int Cl.$^7$: **G01N 27/417**

(45) Hinweis auf die Patenterteilung:
**18.11.1993 Patentblatt 1993/46**

(21) Anmeldenummer: **87104069.7**

(22) Anmeldetag: **19.03.1987**

(54) **Verfahren zum kontinuierlichen Überwachen von gasförmigen Bestandteilen in Gasgemischen, ausgenommen O2**

Method of continuously monitoring the gaseous constituents of a gas mixture, besides oxygen

Méthode pour déterminer en continu les composants gazeux d'un mélange de gaz, sauf l'oxygène

(84) Benannte Vertragsstaaten:
**AT BE CH DE FR GB IT LI NL SE**

(30) Priorität: **27.03.1986 DE 3610363**

(43) Veröffentlichungstag der Anmeldung:
**21.10.1987 Patentblatt 1987/43**

(73) Patentinhaber: **Heraeus Electro-Nite International N.V.**
**3530 Houthalen (BE)**

(72) Erfinder:
• **Häfele, Edelbert**
**D-7500 Karlsruhe 41 (DE)**
• **Kotter, Michael, Dr.**
**D-7520 Bruchsal-Untergrombach (DE)**

(74) Vertreter: **Lenzing, Andreas, Dr. et al**
**Lenzing Gerber**
**Patentanwälte**
**Münsterstrasse 248**
**40470 Düsseldorf (DE)**

(56) Entgegenhaltungen:
| | |
|---|---|
| EP-A- 0 239 106 | DE-A- 2 304 464 |
| DE-A- 2 625 040 | DE-A- 2 709 173 |
| DE-A- 2 752 530 | GB-A- 2 029 578 |
| US-A- 3 699 032 | US-A- 3 946 198 |
| US-A- 3 981 785 | US-A- 4 377 460 |
| US-A- 4 394 240 | |

• **PATENT ABSTRACTS OF JAPAN, vol. 8, no. 208 (P-302)[1645], 21st September 1984;& JP-A-59 91 358**
• **Solid State Chemistry 1982, s. 275-278**

EP 0 241 751 B2

EP 0 241 751 B2

**Beschreibung**

Die Erfindung betrifft ein Verfahren zum kontinuierlichen Überwachen von Konzentrationen von gasförmigen Bestandteilen in Gasgemischen, ausgenommen $O_2$, sowie eine Vorrichtung fur Durchführung des Verfahrens.

Die Messung von Sauerstoff als Bestandteil in einem Gasgemisch mit Hilfe einer Festkörperkette, welche einen Festkörperelektrolyten mit Platin als Elektroden enthält, ist seit langem bekannt. Hierbei wurde meist Luft als Referenzgas verwendet. Die Oberfläche der einen Seite des Festelektrolyten stand in Kontakt mit dem zu messenden Gasgemisch, die Oberfläche der anderen Seite mit der Luft. Die Differenz der Sauerstoffpartialdrücke bewirkt dann ein elektrisches Signal, dessen Größe von der Sauerstoffkonzentration im Meßgas abhängig ist.

Zum Nachweis geringer Konzentrationen von brennbaren Gasen, wie z.B. von Propangas, Stadtgas, Wasserstoff oder Kohlenmonoxid, in einem Luftstrom wurde ein besonders ausgebildeter Meßfühler mit einem Sauerstoffionenleitenden Trockenelektrolyten und zwei auf diesem angeordneten, aus Metallschichten bestehenden Elektroden, von denen die eine in einem Abstand von der Elektrode einen Überzug aus einem oxidierenden Katalysator trägt, entwickelt und in der DE-PS 29 18 932 beschrieben. Der oxidierende Katalysator, der nicht in direktem Kontakt mit der Metallelektrode steht, soll wenigstens ein Bestandteil der Gruppe, bestehend aus Oxiden von V, Cr, Mo, W, Fe, Ni , Co und Mn und den Elementen Pt, Ru, Rh und Pd, enthalten. Die Elektroden können von einer elektrisch isolierenden Schicht aus MgO und einer darauf befindlichen Aktivkohleschicht abgedeckt sein. Der Nachweis der brennbaren Gase erfolgt in der Weise, daß das in dem Luftstrom nachzuweisende brennbare Gas gleich oder stärker als der Luft-Sauerstoff an den Metallschichten der Elektroden adsorbiert wird und daß das brennbare Gas mit dem im Luftstrom enthaltenen Sauerstoff bei einer Temperatur zwischen etwa 250° C und 450° C am räumlich getrennten Katalysator oxidiert wird. Bei dieser Vorgehensweise werden also alle im Luftstrom vorhandenen brennbaren Gase vollständig oxidiert, der im Luftstrom enthaltene Sauerstoff in seiner Konzentration verringert und das Referenzgas, welches zum Erhalt eines elektrischen Signals erforderlich ist, erst nach der Oxidationsreaktion geschaffen. Das der DE-PS 29 18 932 entnehmbare Verfahren erlaubt also nur den Nachweis einzelner brennbarer Gase in einem Luftstrom oder bei gleichzeitiger Anwesenheit mehrerer brennbarer Gase im Luftstrom, die Bestimmung der Summe der Konzentrationen dieser brennbaren Gase. Konzentrationen von nicht brennbaren gasförmigen Bestandteilen in Gasgemischen können mit dem Verfahren bzw. dem Meßfühler aus der deutschen Patentschrift nicht erfaßt werden. Auch der selektive Nachweis verschiedener gasförmiger Bestandteile (sowohl brennbare als auch nicht brennbare) gleichzeitig und mit einer Vorrichtung gelingt nicht.

Der Erfindung liegt daher die Aufgabe zugrunde, ein Verfahren und eine Vorrichtung zum kontinuierlichen Überwachen von Konzentrationen von gasförmigen Bestandteilen in Gasgemischen, ausgenommen $O_2$, beispielsweise in Abgasen aus Großfeuerungsanlagen, zu schaffen, mit welchem (mit welcher) die gewünschten Konzentrationswerte gleichzeitig und separat für die einzelnen Gasbestandteile ungestört und mit verhältnismäßig großer Genauigkeit auf direktem Wege erhalten werden.

Die Aufgabe wird in einem gattungsgemäßen Verfahren gemäß dem Oberbegriff des Hauptanspruches erfindungsgemäß dadurch gelöst, daß

a) die gesamte Festkörperstruktur als metalloxidhaltige Meßelektrode in direktem Kontakt steht mit dem Sauerstoffionen leitenden Material; und

b) die Meßsignale in einem Rechner selbsttätig elektronisch ausgewertet und in Konzentrationswerte umgerechnet werden, die berechneten Werte mit entsprechenden Werten eines zuvor in den Rechner eingegebenen Schemas verglichen werden wobei die kontinuierliche Messung der Konzentration des gasförmigen Bestandteils zur Vermeidung störender Meßsignal-Beeinflussungen durch weitere Gasbestandteile entweder

c) mit Hilfe einer elektrochemischen Zelle, welche keine Querempfindlichkeit gegenüber den nicht zu messenden Gasgemisch-Bestandteilen aufweist, oder

d) mit Hilfe mindestens zweier voneinander getrennter, gegeneinander geschalteter elektrochemischer Zellen, von denen mindestens eine eine Katalysatorsubstanz auf der Meßgasseite zur Umsetzung des Bestandteils mit anderen Gasbestandteilen enthält, oder

e) mit Hilfe einer elektrochemischen Zelle mit mindestens zwei elektrochemischen Teilzellen, von denen mindestens eine eine Katalysatorsubstanz auf der Meßgasseite zur Umsetzung des Bestandteils mit anderen Gasbestandteilen enthält, durchgeführt wird und

f) das auszuwertende Meßsignal, das der Konzentration des Bestandteils entspricht, im Rechner entweder direkt gebildet wird oder durch Differenzbildung des Signals, der Festkörperkette ohne Katalysator, das der Konzentrationssumme aller Gasbestandteile entspricht, zu dem Signal der Festkörperkette mit Katalysator, das der Konzentrationssumme aller Gasbestandteile ohne die selektiv umgesetzte Species entspricht, gebildet wird.

Das Verfahren kann Anwendung finden beim Überwachen und Steuern von Konzentrationen von gasförmigen Bestandteilen in Gasgemischen, wobei gasförmige Komponenten dem Gasgemisch zugeführt werden und ein Teil der Zusatzkomponente in einer Reaktion mit mindestens einem Bestandteil verbraucht wird, wobei

a) die Restkonzentration der zugeführten Komponente oder des zu überwachenden Bestandteils mit Hilfe mindestens einer elektrochemischen Zelle mit mindestens einer Festkörperkette, welche Sauerstoffionen leitendes Material und eine metalloxidhaltige Meß-Elektrode enthält und von der Restkonzentration abhängige, elektrische Signale erzeugt, kontinuierlich gemessen wird und wobei die metalloxidhaltige Meßelektrode in direktem Kontakt steht mit dem Sauerstoffionen leitenden Material,
b) die Meßsignale in einem Rechner selbsttätig elektronisch ausgewertet und in Konzentrationswerte umgerechnet werden, die berechneten Werte mit entsprechenden Werten eines zuvor in den Rechner eingegebenen Schemas verglichen werden und
c) bei ermittelten Abweichungen vom Schema die Zufuhr der Komponente zum Gasgemisch durch den Rechner nach Maßgabe der Höhe der Unterschiede der berechneten Werte von den Werten des

Die Druckschrift DE-C-2918932 bezieht sich auf einen Meßfühler zum Nachweis geringer Konzentrationen von Gaskomponenten, insbesondere brennbare Gaskomponenten wie CO, $C_3H_8$ oder $H_2$ in einem Luftstrom, wobei ein Festelektrolyt mit Sauerstoffionenleitfähigkeit vorgesehen ist und auf die beiden Oberflächen des Festelektrolyten Platinelektroden abgeschieden sind. Die Oberfläche der einen Elektrode bleibt frei, weshalb sie mit dem nachzuweisenden Gas direkt in Berührung kommt, wogegen die Oberfläche der anderen Elektrode mit einem Katalysator abgedeckt ist, der im Betrieb brennbare Gase oxidieren kann. Mit der Spannung der Zelle läßt sich die Konzentration der Gaskomponente bestimmen.
Die DE-A-2304464 beschreibt einen Meßfühler für die Überwachung der Funktionsfähigkeit eines Abgaskatalysators unter Verwendung einer Sauerstoffkonzentrationskette mit einem Sauerstoffionen leitenden Festelektrolyten. Die Elektroden sind eine katalytisch aktive Gegenelektrode auf einem Metall/Metalloxid-Gemisch und eine katalytisch inaktive - vom Meßgas angeströmte - Meßelektrode aus Au oder Ag. Der Fühler soll auf einen erhöhten Restsauerstoffgehalt ansprechen; eine selektive Bestimmung von bestimmten Meßgaskomponenten ist nicht vorgesehen.
In dem Dokument "Solid state chemistry" (1982, S. 275 - 278) wird ein Meßverfahren unter Verwendung eines Sauerstoffionen leitenden Festelektrolyten beschrieben, bei dem beide Elektroden aus verschiedenen Metallen bestehen.
Die EP-B-0006989 beschreibt ein Gasmeßgerät zum Messen des Sauerstoffgehaltes nach dessen Verbrauch mit brennbarem Gas. Die Resultate sind ungenau und unspezifisch für eine bestimmte Gaskomponente außer Sauerstoff. Die Meßelektrode dieses Gasmeßgeräts ist mit einem reaktionsträgen Metalloxid, beispielsweise mit einem Perowskit zum Schutz gegen korrosive Gase beschichtet. Die mit Perowskit beschichteten Elektroden sind nicht geeignete für die selektive Bestimmung einer Gaskomponente.
Schließlich zeigt die GB-A-2029578 Zellen, mit denen selektiv Konzentrationen von Gaskomponenten wie $O_2$ oder $NO_2$ bestimmt werden können, doch wird für die Bestimmung von Gaskomponenten außer Sauerstoff ein mit deren Salzen imprägnierter Festelektrolyt verwendet, der zwar die der zu bestimmenden Gaskomponente entsprechenden Anionen leitet, aber nicht Sauerstoffionen. Schemas selbsttätig gesteuert wird.
Eine Weiterbildung des erfindungsgemäßen Verfahrens gemäß Anspruch 2 besteht darin, daß
die kontinuierliche Messung der Restkonzentration der Zugeführten Komponente zur Vermeidung störender Meßsignal-Beeinflussungen durch weitere Gasbestandteile entweder

a) mit Hilfe einer elektrochemischen Zelle, welche keine Querempfindlichkeit gegenüber den nicht zu messenden Gasgemisch-Bestandteilen aufweist, oder
b) mit Hilfe mindestens zweier voneinander getrennter, gegeneinander geschalteter elektrochemischer Zellen, von denen mindestens eine eine Katalysatorsubstanz auf der Meßgasseite zur Umsetzung der Komponente mit anderen Gasbestandteilen enthält, oder
c) mit Hilfe einer elektrochemischen Zelle mit mindestens zwei elektrochemischen Teilzellen, von denen mindestens eine eine Katalysatorsubstanz auf der Meßgasseite zur Umsetzung der Komponente mit anderen Gasbestandteilen enthält, durchgeführt wird und
d) das auszuwertende Meßsignal, das der Restkonzentration der Komponente entspricht, im Rechner entweder direkt gebildet wird oder durch Differenzbildung des Signals der Festkörperkette ohne Katalysator, das der Konzentrationssumme aller Gasbestandteile entspricht, zu dem Signal der Festkörperkette mit Katalysator, das der Konzentrationssumme aller Gasbestandteile ohne die selektiv umgesetzte Species entspricht, gebildet wird.

Die erfindungsgemäße Vorrichtung zur Durchführung des Verfahrens, welche einen Rechner ohne oder mit Steuerelementen und eine Meßeinheit umfaßt, welche aus einer oder mehreren Gassonden mit sauerstoffionenleitendem, mit dem Meßgas in Kontakt stehendem Material mit Elektroden auf der dem Meßgas zugewandten Fläche und der dem Meßgas abgewandten Fläche und mit den erforderlichen elektrischen Ableitungen für die erzeugten Signale besteht, wobei

auf der dem Meßgas zugewandten Fläche des Sauerstoffionen leitenden Materials einen Festkörperstruktur als metalloxidhaltige Elektrode angeordnet ist; und

die Festkörperstruktur aus metallischen und oxidischen oder aus oxidischen Komponenten besteht, ist dadurch gekennzeichnet, daß

a) die gesamte Festkörperstruktur als metalloxidhaltige Meßelektrode im direkten Kontakt steht mit dem Sauerstoffionen leitenden Material; und

b) an dem Sauerstoffionen leitenden Material 2 sowohl auf der dem Meßgas 5 zugewandten als auch auf der dem Meßgas abgewandten Fläche 3, 4 elektrische Leiter 10, 11 angeordnet sind.

Die Elektrode kann entweder als poröse Festkörperstruktur vorliegen oder als dichte, wegen des erforderlichen Sauerstofftransports hinreichend dünne Schicht, beispielsweise aus wenigen Atomlagen, ausgebildet sein.

Als Rechner und als Steuereinheiten werden bekannte Vorrichtungteile eingesetzt.

Eine vorteilhafte Ausbildung der Vorrichtung weist im Falle mehrerer Sonden mindestens eine Sonde auf der dem Meßgas zugewandten Seite über der Festkörperstruktur eine die chemische Umwandlung eines Gasbestandteiles beschleunigende gasdurchlässige Katalysatorschicht, die den Zwischenraum zum sauerstoffionenleitenden Material und zu der Festkörperstruktur abschließt, auf. Eine andere erfindungsgemäße Vorrichtung ist dadurch gekennzeichnet, daß

die Sonde ein das Sauerstoffionen leitende Material in mindestens zwei Teile trennendes Element aus Sauerstoffionen nicht leitendem Material aufweist,

auf der dem Meßgas zugewandten Seite mindestens über dem einen Teil des Sauerstoffionen leitenden Materials über der Festkörperstruktur mit einer die chemische Umwandlung eines Gasbestandteiles beschleunigenden Katalysatorschicht versehen ist

und die Katalysatorschicht bzw. -Schichten einzeln oder gemeinsam den Zwischenraum zum Sauerstoffionen leitenden Material und zu der Festkörperstruktur verschließend angeordnet sind und

jeder Teil aus Sauerstoff leitendem Material eine separate elektrische Ableitung aufweist.

Vorteilhafterweise enthält die Festkörperstruktur ein Oxid oder mehrere Oxide mindestens eines Übergangsmetalls aus den Nebengruppen IV, V, VIII und I des Periodensystems der Elemente.

Die Festkörperstruktur kann aber auch aus einem oder mehreren Metallen und aus einem oder mehreren Oxiden bestehen.

Mit dem erfindungsgemäßen Verfahren können als Bestandteile eines Gasgemisches beispielsweise $NH_3$, CO, Kohlenwasserstoffe, $NO_x$ und $SO_2$ überwacht werden und die Einhaltung gewünschter Konzentrationsbereiche gesteuert werden.

Mit dem erfindungsgemäßen Verfahren können auch geringe Konzentrationen von Ozon in einem Gas oder Gasgemisch überwacht werden.

Die zu untersuchenden Gasbestandteile können in Abhängigkeit von ihrer Art und von der Ausführung der Sonde vorteilhafterweise in Konzentrationsbereichen zwischen 0 und bis zu 2500 ppm gemessen werden.

Die Vorteile der Erfindung sind gegenüber den bekannten verfahren und Vorrichtungen darin zu sehen, daß die Konzentrationen von gasförmigen Bestandteilen von Gasgemischen je nach Anwendungsfall über einen weiten Konzentrationsbereich gemessen werden können. Die Kennlinien der erfindungsgemäßen Vorrichtung sind einstellbar durch entsprechende Wahl der Art der Elektroden und der Betriebstemperatur. Durch Anwendung von Oxiden und Mischoxiden ergeben sich sehr viele Möglichkeiten für die Zusammensetzung der Elektrode. Durch diese große Vielfalt kann für jeden gasförmigen Bestandteil eines Gasgemisches bzw. für jede Zusatzkomponente eine spezifische Elektrode entwickelt werden. Dabei spielt es keine Rolle, ob nur ein Bestandteil oder mehrere gleichzeitig erfaßt werden sollen. Außerdem ist eine von anderen Gasbestandteilen ungestörte, kontinuierliche Konzentrationsüberwachung jeder einzelnen Komponente möglich. Eine solche Arbeitsweise ist mit dem Meßfühler nach der DE-PS 29 18 932 nicht durchführbar, schon gar nicht wenn sich im Luftstrom mehrere brennbare Gase befinden, deren Konzentrationen sich im Laufe der Zeit in unterschiedlicher Weise verändern. Der bekannte Meßfühler kann nur dann brauchbare Meßwerte bringen, wenn nur ein einziges brennbares Gas im Luftstrom vorhanden ist oder wenn nur der Summenwert aller brennbaren Gase von Interesse ist.

Während bei der Erfindung mit der Umgebungsluft als Referenzgas gemessen wird, arbeitet der bekannte Meßfühler mit dem vom brennbaren Gas befreiten Meßgas als Referenzgas. Eine solche Arbeitsweise ist bei der erfindungsgemäßen Vorrichtung nicht notwendig. Die gleichzeitige Überwachung mehrerer Gasbestandteile wird bei der Erfindung dadurch ermöglicht, daß für die Elektroden auf der Meßgasseite solche unterschiedlicher Zusammensetzung verwendet werden.

Gemessen wird jeweils die Veränderung der Sauerstoffaktivität, die von der örtlichen Zusammensetzung der mit dem Meßgas in Kontakt stehenden Grenzfläche der Oxidelektrode abhängt.

Im Vergleich zu den Ergebnissen, die mit dem Meßfühler nach der DE-PS 29 18 923 erhalten werden können, weisen die mit der erfindungsgemäßen Vorrichtung gewonnenen Ergebnisse nach, daß die erfindungsgemäße Vorrichtung eine wesentlich höhere Empfindlichkeit aufweist, und zwar mindestens um einen Faktor von größer gleich 10 (für CO größer als 15). Die Betriebstemperatur der erfindungsgemäßen Sonden kann je nach dem zu messenden Gasbestandteil und je nach der zu verwendenden Oxidelektrode in einem verhältnismäßig weiten Bereich gewählt werden. Es hat sich herausgestellt, daß bei verhältnismäßig hohen Temperaturen, wie z.B. 550° C, sehr geringe Zeitkonstanten erreicht werden, z.B. eine Zeitkonstante r (50 % Endwert) deutlich unter einer Sekunde.

Als Oxide enthaltende Elektroden, welche in Kontakt mit dem Meßgas stehen und im Zusammenwirken mit der Referenzelektrode brauchbare elektrische Signale erzeugen, sind für $C_4H_{10}$ oder $SO_2$ solche mit $Co_3O_4$ ohne Querempfindlichkeit bei Anwesenheit von $NH_3$, CO oder NO; für $NH_3 \cdot V_2O_5$ ohne Querempfindlichkeit bei Anwesenheit von CO oder $C_4H_{10}$; für CO oder $NH_3$ eine

Elektrode mit Pt·CuO ohne Querempfindlichkeit bei Anwesenheit von $CH_4$. Mit Elektroden, die entweder $Co_3O_4$ oder $TiO_2$ enthalten, kann Ozon in einem Luftstrom gemessen werden, mit einer Elektrode, welche $V_2O_5$ enthält, jedoch nicht.

Tabelle 1 zeigt eine beispielhafte Gegenüberstellung der Eignung der jeweiligen Elektroden für die Detektierung der betrachteten Gaskomponente (Wertung: + + +, + +, +, o)

## Tabelle 1

| Komponente \ Elektrode | $Pt \cdot V_2O_5$ | $V_2O_5$ | $Pt \cdot CuO$ | $TiO_2$ | $Pt \cdot Co_3O_4$ | $Co_3O_4$ |
|---|---|---|---|---|---|---|
| CO | +++ | o | ++ | + | o | o |
| $NH_3$ | +++ | ++ | ++ | + | + | o |
| $SO_2$ | | + | | ++ | | ++ |
| $CH_4$ | | | o | | o | |
| $C_4H_{10}$ | | o | | ++ | o | +++ |
| NO | | + | + | o | o | o |
| $O_3$ | | o | | ++ | | +++ |

Wenn als Bestandteil eines Gasgemisches $NO_x$ in seiner Konzentration überwacht oder gesteuert werden soll, kann als Zusatzkomponente, die zur Verringerung des $NO_x$ dem Gasgemisch zugeführt wird, $NH_3$ verwendet werden. Entsprechend kann bei einem NO-Gehalt im Gasgemisch als reduzierende Zusatzkomponente CO angewendet werden. Durch die Messung der Restkonzentration an $NH_3$ bei Kenntnis der Zugabemenge kann die Konzentration des $NO_x$ im Gasgemisch gemessen, überwacht und gesteuert werden. Die Messung des $NO_x$- bzw. NO-Gehaltes kann aber auch auf direktem Wege mit einer Sonde, die beispielsweise $V_2O_5$ enthält, erfolgen.

# EP 0 241 751 B2

Für den Fall der Verwendung einer Elektrode mit $Pt \cdot V_2O_5$ zur Messung von $NH_3$ bei gleichzeitiger Anwesenheit von CO, kann mit Hilfe einer vorgeschalteten Katalysatorschicht, welche als wirksamen Bestandteil $V_2O_5 \cdot TiO_2$ auf einer Unterlage von $Al_2O_3 \cdot MgO \cdot SiO_2$ enthält, $NH_3$ selektiv detektiert werden.

Im folgenden wird die Erfindung anhand einiger Figuren und einiger beispielhafter Versuche zur Messung von gasförmigen Bestandteilen in Gasgemischen beschrieben.

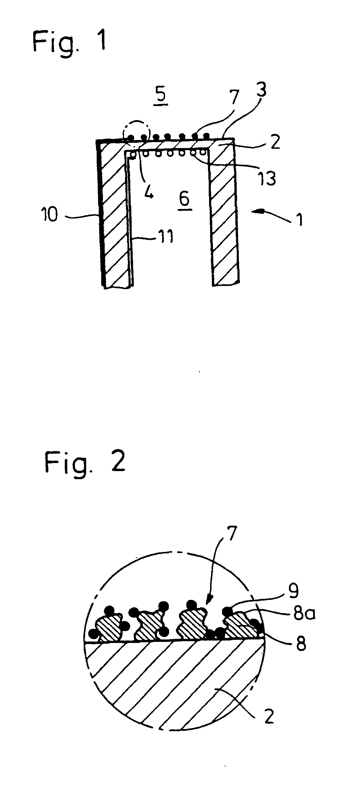

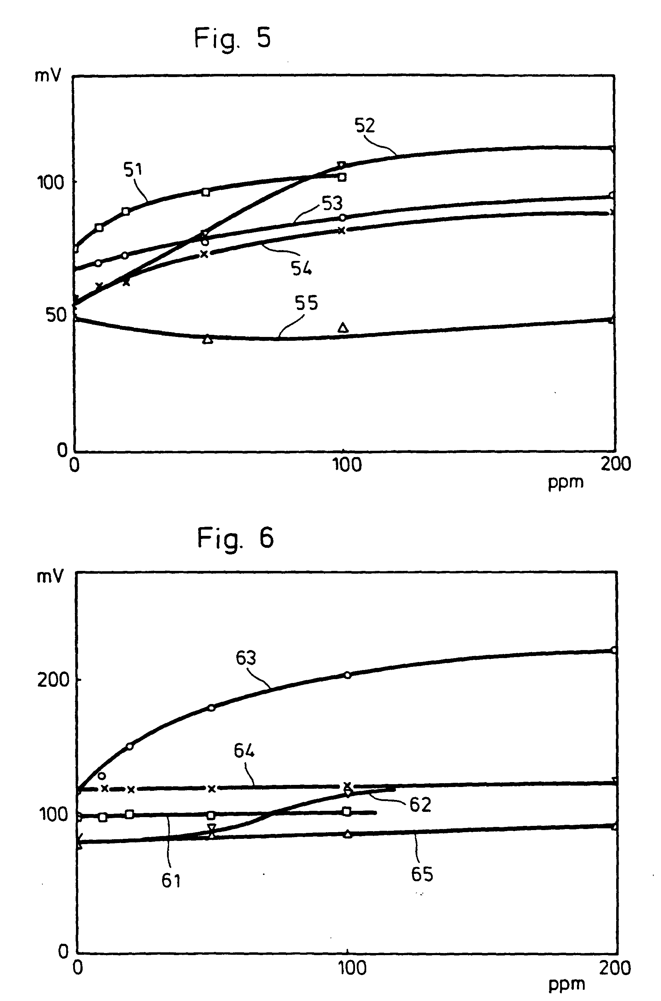

Die Figuren 1 bis 4 zeigen verschiedene Beispiele für den schematischen Aufbau von brauchbaren Versionen der Festkörperketten. Es sind jeweils nur die Sondenköpfe bzw. die mit dem Gasgemisch (Meßgas) in Kontakt stehenden Teile der elektrochemischen Zellen aufgeführt, Rechner und Steuerorgane sind dagegen nicht dargestellt. Die Figuren 5 bis 20 zeigen Ergebnisse und Wirkungsweise der Erfindung bei ihrer Anwendung auf beispielhafte Versuche.

Figur 1 zeigt den Kopf einer einzelnen Meßsonde 1, im wesentlichen bestehend aus einem einseitig geschlossenen Rohr aus einem Festelektrolyten 2, z.B. aus mit Yttriumoxid stabilisiertem Zirkondioxid, aus einer an dessen Innenseite 4 dem Referenzgas 6, beispielsweise Luft, zugewandten Elektrode 13, beispielsweise aus Platin, aus einer auf der dem Meßgas zugewandten Fläche 3 des Festelektrolyten 2 (bzw. des Sauerstoffionen leitenden Materials) angeordneten, porösen Festkörperstruktur 7 als Meßelektrode, welche entweder aus einem oder mehreren Oxiden oder aus einer oder mehreren metallischen und einer oder mehreren oxidischen Komponenten bestehen kann, und aus zwei elektrischen Ableitungen 10 und 11 von der dem Meßgas 5 zugewandten Fläche 3 des Festelektrolyten bzw. von der dem Referenzgas 6 zugewandten Fläche 4. Die elektrischen Ableitungen 10 und 11 können beispielsweise aus Leiterbahnen aus Gold bestehen.

Die Figur 2 zeigt einen Ausschnitt aus dem Bereich der dem Meßgas 5 zugewandten Fläche 3 des Festelektrolyten 2 mit einem Teil der darauf angeordneten porösen Festkörperstruktur 7. Der Figur 2 liegt eine Version der Festkörperstruktur 7 zugrunde, welche zwei metallische Komponenten 8 und 8a und eine oxidische Komponente 9 aufweist. Im vorliegenden Beispiel besteht die eine metallische Komponente 8 aus Platin und die zusätzlich aufgebrachte, die Platinoberfläche zumindest teilweise bedeckende Komponente 8a aus Rhodium. Die oxidische Komponente kann beispielsweise aus $V_2O_5$ bestehen. Während die Dicke der Festelektrolytschicht 2 zwischen den beiden Elektroden ca. 1 mm betragen kann, kann die Festkörperstruktur 7 insgesamt eine Dicke von ca. 5 μm aufweisen.

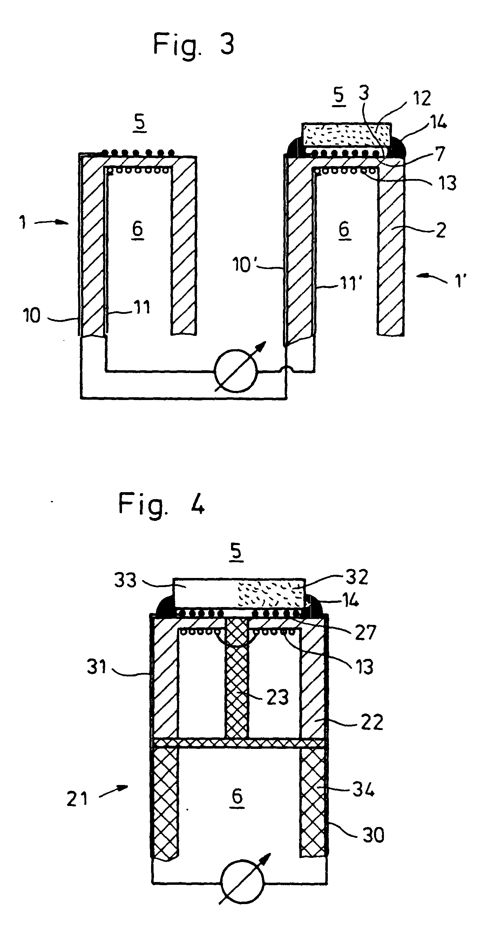

Figur 3 zeigt zwei räumlich voneinander getrennte Sondenköpfe 1 und 1' mit den Ableitungen 10, 10' und 11, 11'. Hierbei ist der eine Sondenkopf 1 wie bereits beschrieben ausgebildet, der andere Sondenkopf 1' weist über der porösen Festkörperstruktur 7 eine gasdurchlässige Katalysatorschicht 12 auf, die den Zwischenraum zum Sauerstoffionen leitenden Material 2 und zu der Festkörperstruktur 7 luftdicht abschließt. Die Katalysatorschicht 12 kann als Tablette ausgebildet sein und mit einem Keramikkleber 14 auf der dem Meßgas 5 zugewandten Fläche 3 des Festelektrolyten befestigt sein. Besteht die Katalysatortablette aus einem die Reaktion

$$NO + NH_3 \rightarrow N_2 + H_2O$$

beschleunigenden Material, so wird bei gleichzeitiger Anwesenheit von NO und $NH_3$ im Meßgas 5 an der Sonde 1 die tatsächliche Konzentration von $NH_3$ im Gas gegenüber der $NH_3$-Konzentration von annähernd O an der Sonde 1' gemessen.

Figur 4 zeigt eine andere Version der erfindungsgemäßen Vorrichtung, bei welcher zwei Festkörperketten in einer Sonde vereinigt sind und durch ein Element 23 aus inertem Material getrennt sind. Die beiden Festkörperketten dieser Sonde 21 sind auf einem Rohr 34 aus einer isolierenden Oxidkeramik angeordnet. Über der Festkörperstruktur 27 der beiden Halbzellen ist eine poröse Tablette 32, 33 angeordnet, deren eine Hälfte 32 aus einer Katalysatorschicht, deren andere Hälfte 33 aus Inertmaterial besteht. Über die Ableitungen 30 auf der Seite der Katalysatorschicht und 31 auf der Seite des Inertmaterials kann das elektrische Signal erfaßt werden.

Versuch 1:

Einem Gasgemisch aus Stickstoff plus 3 Vol.-% Sauerstoff wurden folgende Gase einzeln und in den nachfolgend genannten Konzentrationen zugemischt:

    1. $C_4H_{10}$: 10, 20, 50 und 100 ppm (s.Fig.5, Kurve 51)
    2. $SO_2$: 50, 100 und 200 ppm (Kurve 52)
    3. $NH_3$: 10, 20, 50, 100 und 200 ppm (Kurve 53)
    4. CO: 10, 20, 50, 100 und 200 ppm (Kurve 54)
    5. NO: 50, 100 und 200 ppm (Kurve 55)

Alle Gasmischungen wurden im Hinblick auf die zugemischten Bestandteile hin untersucht mit einer Sonde, welche $TiO_2$ als Oxid-Elektrode aufwies. Die Betriebstemperatur betrug 450° C. Die erhaltenen Sondensignale in mV, in Abhängigkeit der Konzentrationen der zugemischten Bestandteile sind in Figur 5 wiedergegeben.

Versuch 2:

Das gleiche Gasgemisch, wie in Beispiel 1 beschrieben, mit denselben Konzentrationen der genannten Zumischungen wurde bei der gleichen Betriebstemperatur mit einer Sonde mit $V_2O_5$ als Oxid-Elektrode ausgemessen. Die entsprechend erhaltenen Sondensignale in mV, gegenüber den Konzentrationen der Zugemischten Bestandteile finden sich in Figur 6. Die Kurve 63 Zeigt die Werte für $NH_3$, Kurve 64 für CO, Kurve 61 für $C_4H_{10}$, Kurve 62 für $SO_2$ und Kurve 65 für NO.

Versuch 3:

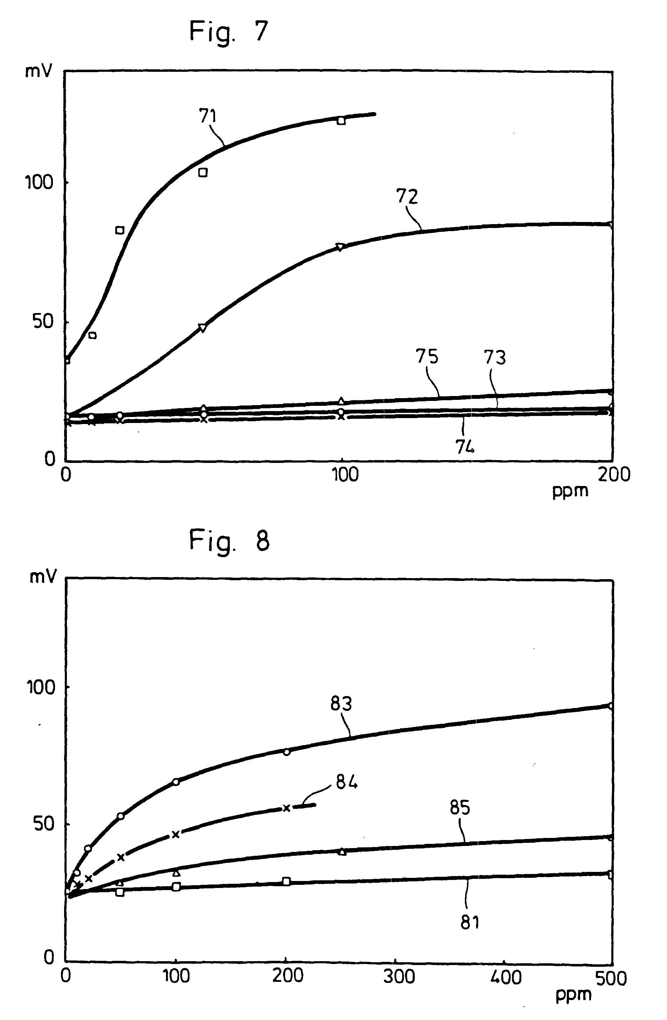

Entsprechende Messungen wurden mit dem gleichen Gasgemisch bei den gleichen Bedingungen unter Verwendung einer Sonde, welche $Co_3O_4$ als Oxid-Elektrode enthielt, durchgeführt. die erhaltenen Sondensignale in mV, in Abhängigkeit von den Konzentrationen der zugemischten Bestandteile gemessen, sind aus Figur 7 ersichtlich. Kurve 71 für $C_4H_{10}$, Kurve 72 für $SO_2$, Kurve 75 für NO, Kurve 73 für $NH_3$, Kurve 74 für CO.

Versuch 4:

Mit Hilfe einer Sonde, welche eine Oxid-Elektrode aus Pt·CuO enthielt, wurden Gasgemische aus Stickstoff und 3 Vol.-% Sauerstoff und bestimmten Konzentrationen der nachfolgend aufgeführten Gasgemischbestandteilen

1. $CH_4$ 50, 100, 200 und 500 ppm (Kurve 81)
2. $NH_3$: 10, 20, 50, 100, 200 und 500 ppm (Kurve 83)
3. CO: 10, 20, 50, 100 und 200 ppm (Kurve 84)
4. NO: 50, 100, 250 und 500 ppm (Kurve 85)

bei einer Temperatur von 450° C auf die jeweiligen Sondensignale in mV, in Abhängigkeit von den Konzentrationen der zugemischten Bestandteile untersucht. Die Ergebnisse finden sich in Figur 8.

Versuch 5:

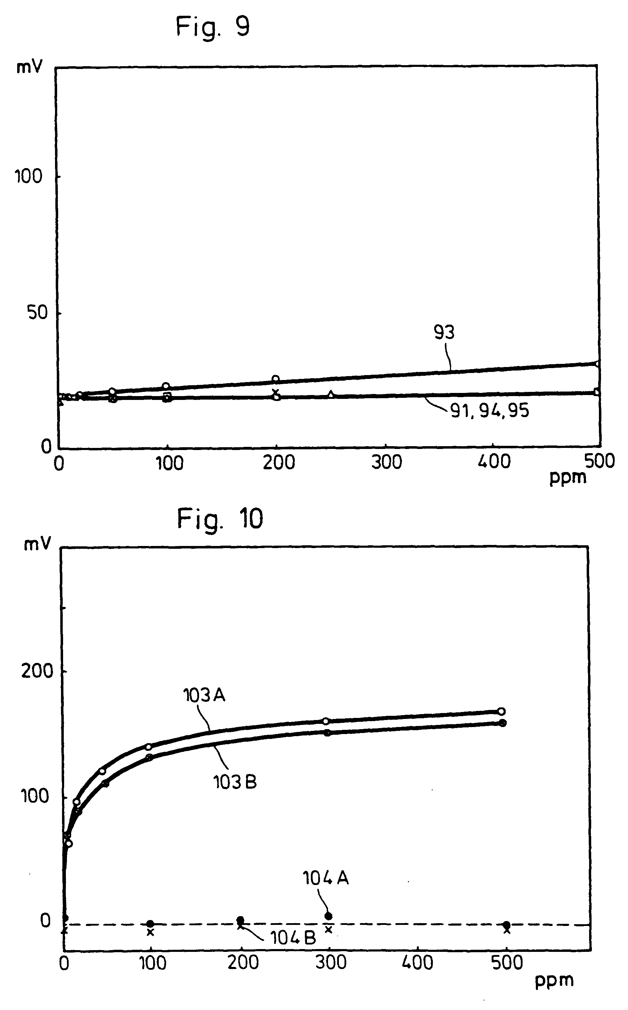

Unter den gleichen Betriebsbedingungen, wie in Versuch 4 beschrieben, wurden die gleichen Gasgemische mit Hilfe einer Sonde mit Pt·$Co_3O_4$ als Oxid-Elektrode untersucht. Die Sondensignale für $NH_3$ gehen aus der Kurve 93 hervor, die entsprechenden Signale für die Zumischungen CO, $CH_4$ und NO aus der Kurve 91/94/95 der Figur 9.

Versuch 6:

In einem Trägergas aus Stickstoff und 3 Vol.-% Sauerstoff wurden Zumischungen aus

1. $NH_3$: in den Konzentrationen 10, 20, 50, 100, 300 und 500 ppm und
2. CO: in den Konzentrationen 100, 200, 300 und 500 ppm
mit einer Vorrichtung aus zwei getrennten Sonden (A) und mit einer Sonde aus zwei Halbzellen (B) jeweils bei 450° C zur Messung gebracht. Die ermittelten Sondensignale in mV, in Abhängigkeit von der Konzentration der Zumischungen, sind aus Figur 10 ersichtlich: mit den verwendeten Sonden wurden für CO weder mit der einen Vorrichtungs-Variante (2 getrennte Sonden: Kurve 104 A) noch mit der anderen (Sonde mit zwei Halbzellen: Kurve 104 B) für eine Überwachung Signale erhalten. Demgegenüber lagen die Kurven 103 A für $NH_3$, gemessen mit zwei getrennten Sonden, und die Kurve 103 B, gemessen mit einer Sonde aus zwei Halbzellen) nahe beieinander und zeigten besonders für Konzentrationen im Bereich von 0 bis 50 ppm jeweils einen steilen Anstieg. In allen betrachteten Fällen bestand das Elektrodenmaterial aus Pt•$V_2O_5$, der der zweiten Sonde 1' oder der Zweiten Halbzelle der Sonde 21 (siehe Fig. 3 und 4) vorgeschaltete Katalysator aus $V_2O_5$•$TiO_2$ auf $Al_2O_3$•MgO•$SiO_2$

Versuch 7:

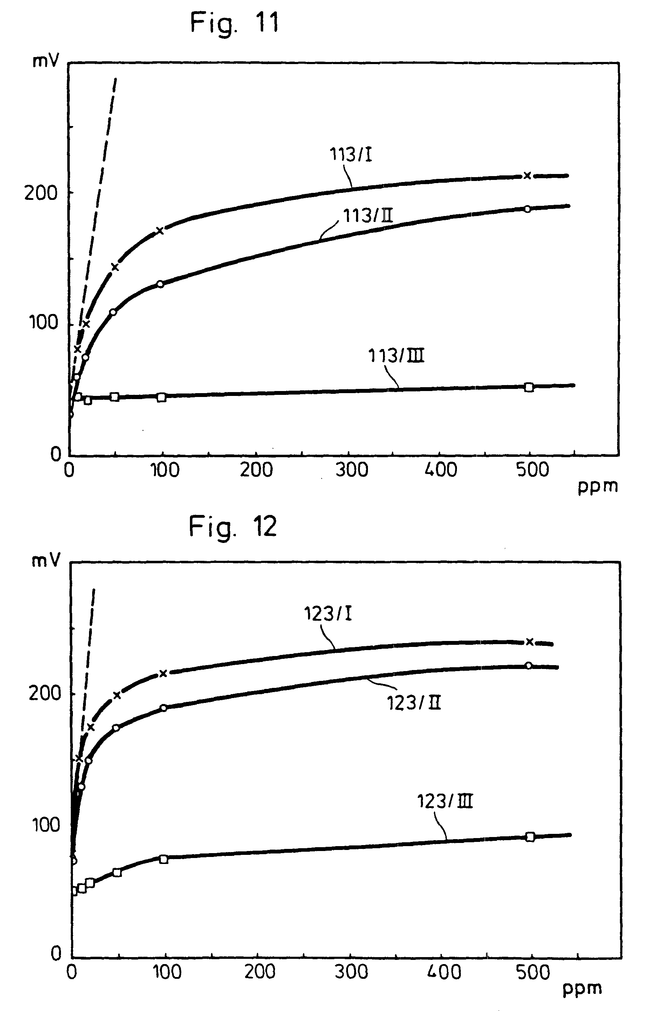

$NH_3$-Zumischungen in Konzentrationen von 10, 20, 50, 100 und 500 ppm zu einem Trägergas aus Stickstoff mit 3 Vol.-% Sauerstoff wurden bei 550 ° C zur Messung gebracht unter Verwendung verschiedener poröser Festkörperstrukturen als Elektroden auf der Meßgasseite. Figur 11 zeigt die Ergebnisse. Die Kurve 113/I wurde mit einer Elektrode aus Pt•$V_2O_5$ erhalten, die Kurve 113/II mit einer Elektrode aus Pt•Rh•$V_2O_5$. Zum Vergleich wurden die ver-

schiedenen $NH_3$-Konzentrationen mit einer Elektrode aus reinem Platin (ohne Oxid) als poröser Festkörperstruktur ausgemessen. Die hierzu gehörige Kurve 113/III zeigt praktisch keinen Anstieg in den Sondensignalen und ist somit für eine Überwachung von $NH_3$ in einem Gasgemisch nicht brauchbar. Die gestrichelte Gerade zeigt als Tangente des ersten Kurventeils der Kurve 113/I den Anstieg dieser Kurve im Bereich von 0 bis 10 ppm $NH_3$ und weist die Qualität der Pt•$V_2O_5$-Elektrode mit 4 mV/ppm $NH_3$ nach.

Versuch 8:

Bei gleichen Zumischungen von $NH_3$-Konzentrationen zum gleichen Gasgemisch unter Verwendung der gleichen Elektroden wie in Versuch 7 wurden die Sondensignale lediglich bei einer niedrigeren Temperatur, nämlich bei 450°C, gemessen. Die entsprechenden Kurven

    123/I bei Verwendung von Pt•$V_2O_5$
    123/II bei Verwendung von Pt•Rh•$V_2O_5$ und
    123/III bei Verwendung von Pt als Elektrode auf der Meßgasseite

ergeben in Figur 12 ein ähnliches Bild, wie in Figur 11 in Versuch 7, mit der Änderung, daß Kurven mit höheren Signalwerten in mV entstanden sind. Die gestrichelte Linie zeigt den Anstieg der Kurve 123/I im Bereich von 0 bis 10 ppm $NH_3$, der noch einen steileren Verlauf mit 7 mV/ppm $NH_3$ nimmt als der entsprechende Teil der Kurve 113/I in Figur 11.

Versuch 9:

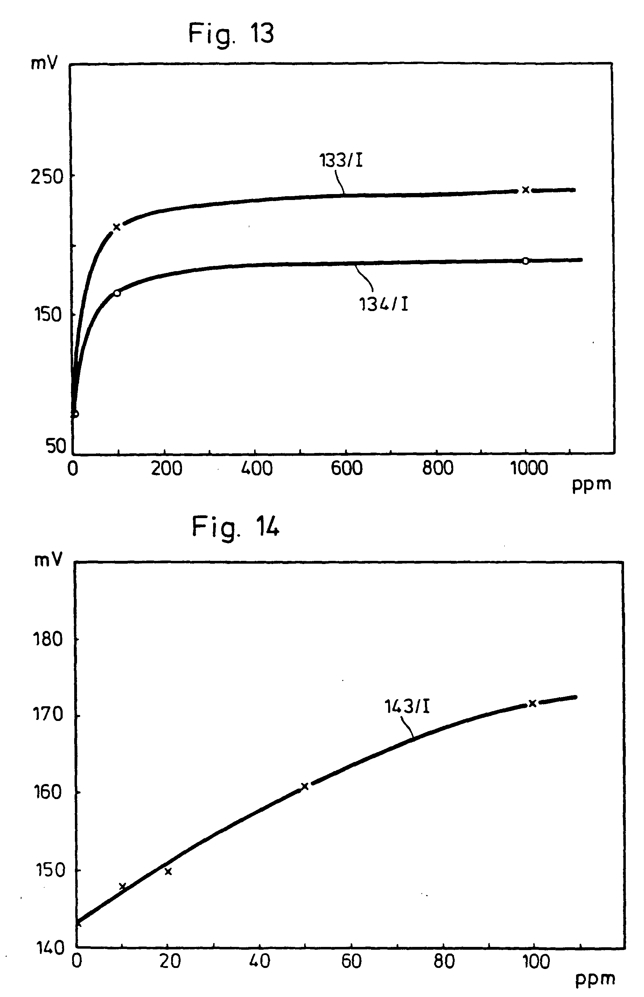

Durch Zumischen von 100 ppm und 1000 ppm $NH_3$ einerseits und CO andererseits zu einem Gasgemisch aus Stickstoff mit 3 Vol.-% Sauerstoff wurden Meßgase hergestellt, deren Sondensignale in mV unter Verwendung einer Oxidelektrode aus Pt· $V_2O_5$ bei 450° C erfaßt wurden. Ein Vergleich der Ergebnisse, die in Figur 13 dargestellt sind, zeigt, daß zunächst sowohl die $NH_3$-Kurve 133/I als auch die CO-Kurve 134/I jeweils bis 100 ppm einen unterschiedlich steilen Anstieg aufweisen, danach jedoch rasch verflachen. Die Werte für die Sondensignale für $NH_3$-Konzentrationen liegen höher als die für CO-Konzentrationen.

Versuch 10:

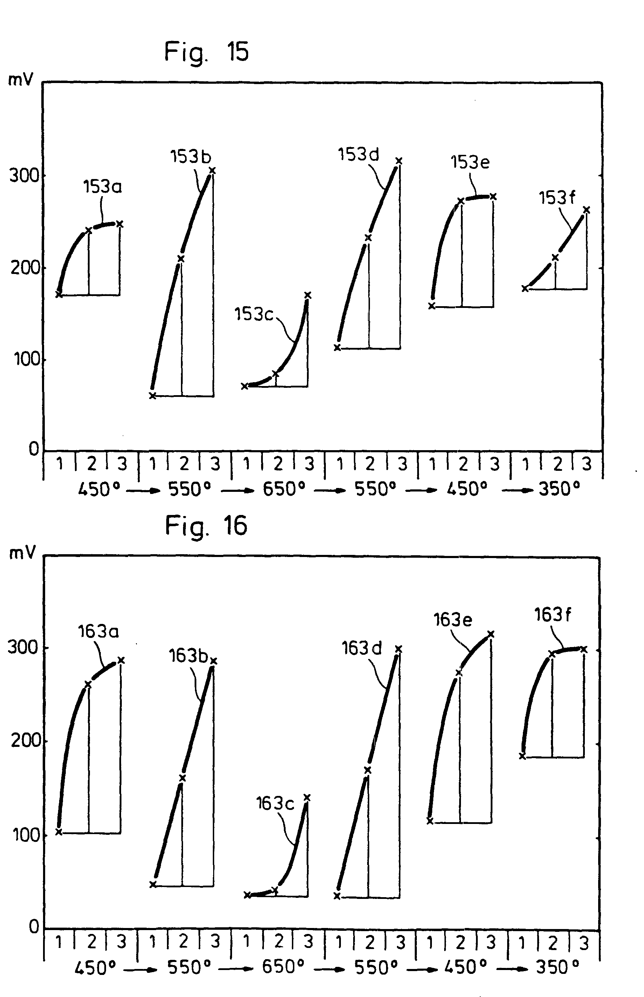

Zu einem Gasgemisch aus Stickstoff, 3 Vol.-% Sauerstoff, 200 ppm NO und 200 ppm CO wurden 10, 20, 50 und 100 ppm $NH_3$ zugemischt. Bei Verwendung einer Oxidelektrode aus Pt•$V_2O_5$ wurden bei 450° C die Sondensignale in mV für den $NH_3$-Bestandteil gemessen. Die Werte für die Sondensignale lagen zwar etwas niedriger als vergleichbare Versuche in einem Gasgemisch aus Stickstoff und ausschließlich 3 Vol.-% Sauerstoff, doch zeigt die zugehörige Kurve 143/I in Figur 14 einen gut verwertbaren Verlauf für eine Überwachung geringer Konzentrationen an $NH_3$ in einem solchen Gasgemisch.

Versuch 11:

In diesem Versuch wurden $NH_3$-Zusätze von 100 ppm und 1000 ppm zu einem Gasgemisch aus Stickstoff und 3 Vol.-% Sauerstoff zugemischt und die Sondensignale in mV mit Hilfe von drei verschiedenen Oxidelektroden bei Temperaturen zwischen 350° C und 650°C gemessen. Die Oxidelektroden bestanden aus:

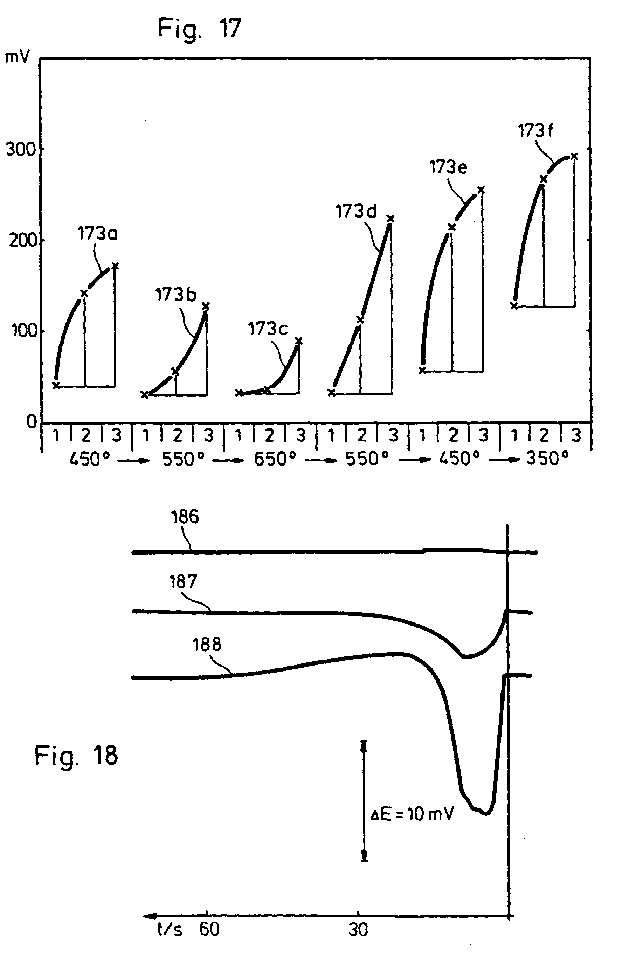

    a) Pt•$TiO_2$ (siehe Figur 15)
    b) Pt•$V_2O_5$ (siehe Figur 16)
    c) Pt•$TiO_2$•$V_2O_5$ (siehe Figur 17) Für alle drei Teilversuche (a), b) und c)) wurden die Sondensignale in mV unter vergleichbaren Bedingungen gemessen, d.h. einerseits für das Gasgemisch ohne $NH_3$-Zusatz (1), Gasgemisch plus 100 ppm $NH_3$ - (2), Gasgemisch plus 1000 ppm $NH_3$ (3) und andererseits bei Temperaturen, die beginnend mit 450° C schrittweise zunächst um 100° erhöht wurden und danach wieder um dieselbe Differenz abgesenkt wurden bis auf 350 °C. Da die Sonden vor Durchlauf des Temperaturzyklus bei einer relativ niedrigen Temperatur von 450° C präpariert wurden, ist zu erwarten, daß wie die Fig. 15 bis 17 zeigen, die Hochtemperaturbehandlung einen Einfluß auf die Sondencharakteristik hat. Vor allem zeigen diese Messungen, daß in Abhängigkeit von der Temperatur $NH_3$ in verschiedenen Konzentrationsbereichen gemessen werden kann.

Versuch 12:

Bei 400° C, Versuchsteil a) (Fig. 18) und bei 450 C, Versuchsteil b) (Fig. 19) wurde die Wirkung von Ozon in einem Sauerstoffstrom auf drei verschiedene Oxidelektroden untersucht. Hierbei ergab die kurzzeitige und einmalige Zugabe von Ozon (V = 5 ml, $x_{03}$ = 20 µg/l) zum Sauerstoffstrom ($\dot{v}$ = 10 ml/sec) bei Verwendung von $Co_3O_4$ als Elektrode einen gut ausgebildeten Peak sowohl in Versuchsteil a) (Figur 18, Kurve 188) als auch in Versuchsteil b) (Figur 19, Kurve 198). Ein weniger gut ausgebildeter Peak war bei $TiO_2$ als Elektrode zu beobachten, sowohl in Versuchsteil a) (Figur 18, Kurve 187) als auch in Versuchsteil b) (Figur 19, Kurve 197). Keine Empfindlichkeit gegenüber Ozon zeigte $V_2O_5$ als Elektrode sowohl in Versuchsteil a) (Figur 18, Kurve 186) als auch in Versuchsteil b) (Figur 19, Kurve 196).

Versuch 13:

In diesem Versuch wurde bei einer vom Startzeitpunkt an gleichmäßigen Zumischung von 20 ppm $NH_3$ in ein Gasgemisch aus Stickstoff und 3 Vol.-% Sauerstoff die Ansprechgeschwindigkeit bei einer Temperatur von 550 ° C und zwei verschiedenen Oxidelektroden untersucht. Die Ergebnisse zeigt die Figur 20, zum Erhalt der Kurve 203/I wurde als Oxidelektrode Pt·$V_2O_5$ verwendet, für die Kurve 203/II die Elektrode Pt·Rh·$V_2O_5$. Aus der Kurve 203/II ist erkennbar, daß innerhalb einer Zeitspanne von weniger als 1 Sekunde 50 % des Signalendwertes erhalten wurde.
Eine zusammenfassende Darstellung der durchgeführten Messungen ist in den nachfolgenden Tabellen 2a und 2b aufgeführt.

Tabelle 2a

| Trägergas Meßseite: 3 % $O_2$ in $N_2$ | | | | |
|---|---|---|---|---|
| Referenzgas: | Umgebungsluft | | | |
| Elektrodenmaterial | Temperatur °C | zu messender Gasbestandteil oder Restkonzentration der zugeführten Komponente im Trägergas der Meßseite | Darstellung in | |
| | | | Fig. Nr. | Kurve Nr. |
| Pt | 450 | 0 - 500 ppm $NH_3$ | 12 | 123/III |
| Pt | 550 | 0 - 500 ppm $NH_3$ | 11 | 113/III |
| Pt·$V_2O_5$ | 450 | 0 - 500 ppm $NH_3$ | 12 | 123/I |
| Pt·$V_2O_5$ | 450 | 0 - 1000 ppm $NH_3$ | 13 | 133/I |
| Pt·$V_2O_5$ | 450 | 0 - 1000 ppm CO | 13 | 134/I |
| Pt·$V_2O_5$ | 550 | 0 - 500 ppm $NH_3$ | 11 | 113/I |
| Pt·Rh·$V_2O_5$ | 450 | 0 - 500 ppm $NH_3$ | 12 | 123/II |
| Pt·Rh·$V_2O_5$ | 550 | 0 - 500 ppm $NH_3$ | 11 | 113/II |
| Pt·$TiO_2$ | 350-650 | 0 - 1000 ppm $NH_3$ | 15 | 153 a-f |
| Pt·$V_2O_5$ | 350-650 | 0 - 1000 ppm $NH_3$ | 16 | 163 a-f |
| Pt·$TiO_2$·$V_2O_5$ | 350-650 | 0 - 1000 ppm $NH_3$ | 17 | 173 a-f |
| Pt·CuO | 450 | 0 - 500 ppm $NH_3$ | 8 | 83 |
| Pt·CuO | 450 | 0 - 200 ppm CO | 8 | 84 |
| Pt·CuO | 450 | 0 - 1000 ppm $CH_4$ | 8 | 81 (bis 500 ppm) |
| Pt·CuO | 450 | 0 - 2500 ppm NO | 8 | 85 (bis 500 ppm) |
| Pt·$Co_3O_4$ | 450 | 0 - 500 ppm $NH_3$ | 9 | 93 |
| Pt·$Co_3O_4$ | 450 | 0 - 200 ppm CO | 9 | 94 |
| Pt·$Co_3O_4$ | 450 | 0 - 1000 ppm $CH_4$ | 9 | 91 (bis 500 ppm) |
| Pt·$Co_3O_4$ | 450 | 0 - 2500 ppm NO | 9 | 95 (bis 500 ppm) |
| $Co_3O_4$ | 450 | 0 - 500 ppm $NH_3$ | 7 | 73 (bis 200 ppm) |
| $Co_3O_4$ | 450 | 0 - 200 ppm CO | 7 | 74 |

EP 0 241 751 B2

Tabelle 2a   (fortgesetzt)

| Trägergas Meßseite: 3 % $O_2$ in $N_2$ | | | | |
|---|---|---|---|---|
| Referenzgas: | Umgebungsluft | | | |
| Elektrodenmaterial | Temperatur °C | zu messender Gasbestandteil oder Restkonzentration der zugeführten Komponente im Trägergas der Meßseite | Darstellung in | |
| | | | Fig. Nr. | Kurve Nr. |
| $Co_3O_4$ | 450 | 0 - 500 ppm NO | 7 | 75 (bis 200 ppm) |
| $Co_3O_4$ | 450 | 0 - 500 ppm $SO_2$ | 7 | 72 (bis 200 ppm) |
| $Co_3O_4$ | 450 | 0 - 100 ppm $C_4H_{10}$ | 7 | 71 |
| $TiO_2$ | 450 | 0 - 500 ppm $NH_3$ | 5 | 53 (bis 200 ppm) |
| $TiO_2$ | 450 | 0 - 200 ppm CO | 5 | 54 |
| $TiO_2$ | 450 | 0 - 500 ppm $SO_2$ | 5 | 52 (bis 200 ppm) |
| $TiO_2$ | 450 | 0 - 100 ppm $C_4H_{10}$ | 5 | 51 |
| $V_2O_5$ | 450 | 0 - 500 ppm $NH_3$ | 6 | 63 (bis 200 ppm) |
| $V_2O_5$ | 450 | 0 - 200 ppm CO | 6 | 64 |
| $V_2O_5$ | 450 | 0 - 100 ppm $SO_2$ | 6 | 62 |
| $V_2O_5$ | 450 | 0 - 100 ppm $C_4H_{10}$ | 6 | 61 |

Tabelle 2b

| Messungen mit veränderter Zusammensetzung des Trägerstroms der Meßseite | | | | | |
|---|---|---|---|---|---|
| Elektrodenmaterial | Temperatur °C | Trägergas | Komponente | Darstellung in | |
| | | | | Fig. Nr. | Kurve Nr. |
| $Pt·V_2O_5$ | 450 | 3 % $O_2/N_2$ 200 ppm NO, 200 ppm CO | 0-100 ppm $NH_3$ | 14 | 143/I |
| $Co_3O_4$ | 450 | $O_2$ | $O_3$ (instat.) | 19 | 198 |
| $TiO_2$ | 450 | $O_2$ | $O_3$ (instat.) | 19 | 197 |
| $V_2O_5$ | 450 | $O_2$ | $O_3$ (instat.) | 19 | 196 |
| $Co_3O_4$ | 400 | $O_2$ | $O_3$ (instat.) | 18 | 188 |
| $TiO_2$ | 400 | $O_2$ | $O_3$ (instat.) | 18 | 187 |
| $V_2O_5$ | 400 | $O_2$ | $O_3$ (instat.) | 18 | 186 |

**Patentansprüche**

1.  Verfahren zum kontinuierlichen Überwachen von Konzentrationen von gasförmigen Bestandteilen in Gasgemischen, ausgenommen $O_2$, wobei die Konzentration des gasförmigen Bestandteils mit Hilfe mindestens einer elektrochemischen Zelle mit mindestens einer Festkörperkette, welche Sauerstoffionen leitendes Material und eine Festkörperstruktur als metalloxidhaltige Elektrode enthält und von der Konzentration des Bestandteils abhängige, elektrische Signale erzeugt, kontinuierlich gemessen wird, **dadurch gekennzeichnet, daß**

    a) die gesamte Festkörperstruktur als metalloxidhaltige Meßelektrode in direktem Kontakt steht mit dem Sauerstoffionen leitenden Material; und

    b) die Meßsignale in einem Rechner selbsttätig elektronisch ausgewertet und in Konzentrationswerte umgerechnet werden, die berechneten Werte mit entsprechenden Werten eines zuvor in den Rechner eingegebenen Schemas verglichen werden,
    wobei
    die kontinuierliche Messung der Konzentration des gasförmigen Bestandteils zur Vermeidung störender Meßsignal-Beeinflussungen durch weitere Gasbestandteile entweder

c) mit Hilfe einer elektrochemischen Zelle, welche keine Querempfindlichkeit gegenüber den nicht zu messenden Gasgemisch-Bestandteilen aufweist, oder

d) mit Hilfe mindestens zweier voneinander getrennter, gegeneinander geschalteter elektrochemischer Zellen, von denen mindestens eine eine Katalysatorsubstanz auf der Meßgasseite zur Umsetzung des Bestandteil mit anderen Gasbestandteilen enthält, oder

e) mit Hilfe einer elektrochemischen Zelle mit mindestens zwei elektrochemischen Teilzellen, von denen mindestens eine eine Katalysatorsubstanz auf der Meßgasseite zur Umsetzung des Bestandteils mit anderen Gasbestandteilen enthält, durchgeführt wird und

f) das auszuwertende Meßsignal, das der Konzentration des Bestandteils entspricht, im Rechner entweder direkt gebildet wird oder durch Differenzbildung des Signals der Festkörperkette ohne Katalysator, das der Konzentrationssumme aller Gasbestandteile entspricht, zu dem Signal der Festkörperkette mit Katalysator, das der Konzentrationssumme aller Gasbestandteile ohne die selektiv umgesetzte Species entspricht, gebildet wird.

2. Verfahren zum kontinuierlichen Überwachen und Steuern von Konzentrationen von gasförmigen Bestandteilen in einem Gasgemisch, bei welchem gasförmige Komponenten dem Gasgemisch zugeführt werden, wobei ein Teil der Zusatzkomponente in einer Reaktion mit mindestens einem Bestandteil verbraucht wird, wobei die Restkonzentration der zugeführten Komponente oder des zu überwachenden Bestandteils mit Hilfe mindestens einer elektrochemischen Zelle mit mindestens einer Festkörperkette, welche Sauerstoffionen leitendes Material und eine Festkörperstruktur als metalloxidhaltige Elektrode enthält und von der Restkonzentration abhängige, elektrische Signale erzeugt, kontinuierlich gemessen wird, **dadurch gekennzeichnet, daß**

a) die gesamte Festkörperstruktur als metalloxidhaltige Meßelektrode in direktem Kontakt steht mit dem Sauerstoffionen leitenden Material

b) die Meßsignale in einem Rechner selbsttätig elektronisch ausgewertet und in Konzentrationswerte umgerechnet werden, die berechneten Werte mit entsprechenden Werten eines zuvor in den Rechner eingegebenen Schemas verglichen werden; und

c) bei ermittelten Abweichungen vom Schema die Zufuhr der Komponente zum Gasgemisch durch den Rechner nach Maßgabe der Höhe der Unterschiede der berechneten Werte von den Werten des Schemas selbsttätig gesteuert wird.

3. Verfahren nach Anspruch 2, **dadurch gekennzeichnet, daß** die kontinuierliche Messung der Restkonzentration der zugeführten Komponente zur Vermeidung störender Meßsignal-Beeinflussungen durch weitere Gasbestandteile entweder

a) mit Hilfe einer elektrochemischen Zelle, welche keine Querempfindlichkeit gegenüber den nicht zu messenden Gasgemisch-Bestandteilen aufweist, oder

b) mit Hilfe mindestens zweier voneinander getrennter, gegeneinander geschalteter elektrochemischer Zellen, von denen mindestens eine eine Katalysatorsubstanz auf der Meßgasseite zur Umsetzung der Komponente mit anderen Gasbestandteilen enthält, oder

c) mit Hilfe einer elektrochemischen Zelle mit mindestens zwei elektrochemischen Teilzellen, von denen mindestens eine eine Katalysatorsubstanz auf der Meßgasseite zur Umsetzung der Komponente mit anderen Gasbestandteilen enthält, durchgeführt wird und

d) das auszuwertende Meßsignal, das der Restkonzentration der Komponente entspricht, im Rechner entweder direkt gebildet wird oder durch Differenzbildung des Signals der Festkörperkette ohne Katalysator, das der Konzentrationssumme aller Gasbestandteile entspricht, zu dem Signal der Festkörperkette mit Katalysator, das der Konzentrationssumme aller Gasbestandteile ohne die selektiv umgesetzte Species entspricht, gebildet wird.

**4.** Vorrichtung zur Durchführung des Verfahrens nach Anspruch 1 oder 2, welche einen Rechner ohne oder mit Steuerelementen und eine Meßeinheit umfaßt, welche aus einer oder mehreren Gassonden mit Sauerstoffionen leitendem, mit dem Meßgas in Kontakt stehendem Material mit Elektroden auf der dem Meßgas zugewandten Fläche und der dem Meßgas abgewandten Fläche und mit den erforderlichen elektrischen Ableitungen für die erzeugten Signale besteht, wobei auf der dem Meßgas zugewandten Fläche (3) des Sauerstoffionen leitenden Materials (2) eine Festkörperstruktur (7) als metalloxidhaltige Elektrode angeordnet ist und die Festkörperstruktur (7) aus metallischen und oxidischen oder aus oxidischen Komponenten (8, 9) besteht, **dadurch gekennzeichnet, daß**

a) die gesamte Festkörperstruktur als metalloxidhaltige Meßelektrode im direkten Kontakt steht mit dem Sauerstoffionen leitenden Material ; und

b) an dem Sauerstoffionen leitenden Material (2) sowohl auf der dem Meßgas (5) zugewandten als auch auf der dem Meßgas abgewandten Fläche (3.4) elektrische Leiter (10.11) angeordnet sind.

**5.** Vorrichtung nach Anspruch 4, **dadurch gekennzeichnet, daß** im Falle mehrerer Sonden (1, 1', 1" etc.) mindestens eine Sonde (1') auf der dem Meßgas (5) zugewandten Seite über der Festkörperstruktur (7) eine die chemische Umwandlung eines Gasbestandteiles beschleunigende gasdurchlässige Katalysatorschicht (12), die den Zwischenraum zum Sauerstoffionen leitenden Material (2) und zu der Festkörperstruktur (7) abschließt, aufweist.

**6.** Vorrichtung nach Anspruch 4, **dadurch gekennzeichnet, daß** die Sonde (21) ein das Sauerstoffionen leitende Material (22) in mindestens zwei Teile trennendes Element (23) aus Sauerstoffionen nicht leitendem Material aufweist, auf der dem Meßgas (5) zugewandten Seite mindestens über dem einen Teil des Sauerstoffionen leitenden Materials (22) über der Festkörperstruktur (27) mit einer die chemische Umwandlung eines Gasbestandteiles beschleunigenden Katalysatorschicht (32, 32', 32" etc.) versehen ist und die Katalysatorschicht bzw. -schichten einzeln oder gemeinsam den Zwischenraum zum Sauerstoffionen leitenden Material (22) und zu der Festkörperstruktur (27) verschließend angeordnet sind und jeder Teil aus Sauerstoff leitendem Material (22) eine separate elektrische Ableitung (30, 30', 30" etc., 31) aufweist.

**7.** Vorrichtung nach einem der Ansprüche 4 bis 6, **dadurch gekennzeichnet, daß** die Festkörperstruktur (7) ein Oxid oder mehrere Oxide mindestens eines Übergangsmetalles aus den Nebengruppen IV, V, VIII und 1 des Periodensystems der Elemente enthält.

**8.** Vorrichtung nach einem der Ansprüche 4 bis 6, **dadurch gekennzeichnet, daß** die Festkörperstruktur (7) aus einem oder mehreren Metallen und aus einem oder mehreren Oxiden besteht.

**Claims**

**1.** Method of continuously monitoring concentrations of gaseous constituents in mixtures of gases, except $O_2$, the concentration of the gaseous constituent being measured continuously by means of at least one electrochemical cell having at least one solid-state chain which contains material conductive of oxygen ions and a solid-state structure in the form of a metal-oxide-containing electrode and which generates electrical signals dependent on the concentration of the constituent, **characterised in that**

a) the entire solid-state structure in the form of a metal-oxide-containing measuring electrode is in direct contact with the material conductive of oxygen ions, and

b) the measurement signals are automatically analysed electronically in a computer and converted into concentration values, the values calculated are compared with corresponding values from a chart previously loaded into the computer,
the continuous measurement of the concentration of the gaseous constituent being carried out, in order to avoid disruptive effects on the measurement signal from other gaseous constituents, either

c) by means of an electrochemical cell which does not have any cross-sensitivity to the constituents of the gas mixture which are not to be measured, or

d) by means of at least two electrochemical cells which are separated from one another but connected together and at least one of which contains a catalyst substance on the side on which the gas being measured is situated to cause the constituent to react with other gaseous constituents, or

e) by means of an electrochemical cell having at least two electrochemical part-cells at least one of which contains a catalyst substance on the side on which the gas being measured is situated to cause the constituent to react with other gaseous constituents, and

f) the measurement signal to be analysed, which represents the concentration of the constituent, is either formed directly in the computer or is formed by finding the difference between the signal from the solid-state chain with no catalyst, which represents the total concentration of all the gaseous constituents, and the signal from the solid-state chain with the catalyst, which represents the total concentration of all the gaseous constituents without the selectively reacted species.

2. Method of continuously monitoring and controlling concentrations of gaseous constituents in a mixture of gases, in which gaseous components are fed into the mixture of gases, some of the added component[1] being consumed in a reaction with at least one constituent, the residual concentration of the infed component or of the constituent to be monitored being measured continuously by means of at least one electrochemical cell having at least one solid-state chain which contains material conductive of oxygen ions and a solid-state structure in the form of a metal-oxide-containing electrode and which generates electrical signals dependent on the residual concentration, **characterised in that**

a) the entire solid-state structure in the form of a metal-oxide-containing measuring electrode is in direct contact with the material conductive of oxygen ions

b) the measurement signals are automatically analysed electronically in a computer and converted into concentration values, the values calculated are compared with corresponding values from a chart previously loaded into the computer, and

c) if differences are found from the chart, the infeed of the component into the mixture of gases is controlled automatically by the computer as dictated by the size of the differences between the values calculated and the values in the chart.

3. Method according to claim 2, **characterised in that** the continuous measurement of the residual concentration of the infed component is carried out, in order to avoid disruptive effects on the measurement signal from other gaseous constituents, either

a) by means of an electrochemical cell which does not have any cross-sensitivity to the constituents of the gas mixture which are not to be measured, or

b) by means of at least two electrochemical cells which are separated from one another but connected together and at least one of which contains a catalyst substance on the side on which the gas being measured is situated to cause the component to react with other gaseous constituents, or

c) by means of an electrochemical cell having at least two electrochemical part-cells at least one of which contains a catalyst substance on the side on which the gas being measured is situated to cause the component to react with other gaseous constituents, and

d) the measurement signal to be analysed, which represents the residual concentration of the component, is either formed directly in the computer or is formed by finding the difference between the signal from the solid-state chain with no catalyst, which represents the total concentration of all the gaseous constituents, and the signal from the solid-state chain with the catalyst, which represents the total concentration of all the gaseous constituents without the selectively reacted species.

4. Apparatus for performing the method according to claim 1 or 2, which comprises a computer with or without control elements, and a measuring unit which comprises one or more gas probes having material conductive of oxygen ions which is in contact with the gas being measured and which has electrodes on the face adjacent the gas being measured and on the face remote from the gas being measured and which has the electrical cables required to conduct away the electrical signals generated, a solid-state structure (7) forming a metal-oxide-containing elec-

[1] Translator's note: The use of the singular here and the plural in the previous clause reflects the German text.

trode being arranged on that face (3) of the material (2) conductive of oxygen ions which is adjacent the gas being measured and the solid-state structure (7) being composed of metallic and oxidic or of oxidic (8, 9) components, **characterised in that**

a) the entire solid-state structure in the form of a metal-oxide-containing measuring electrode is in direct contact with the material conductive of oxygen ions, and

b) electrical conductors (10, 11) are arranged on the material (2) conductive of oxygen ions both on the face adjacent the gas being measured (5) and on the face remote from the gas being measured (3, 4).

5. Apparatus according to claim 4, **characterised in that**, where there are a plurality of probes (1, 1', 1", etc.), at least one probe (1') has, on the side adjacent the gas being measured (5) and above the solid-state structure (7), a gas-permeable layer of catalyst (12) which accelerates the chemical conversion of one gaseous constituent and which seals off the gap formed with the material (2) conductive of oxygen ions and with the solid-state structure (7).

6. Apparatus according to claim 4, **characterised in that** the probe (21) has a member (23) composed of material not conductive of oxygen ions which divides the material (22) conductive of oxygen ions into at least two parts, and is provided, on the face adjacent to the gas being measured (5) over at least part of the material (22) conductive of oxygen ions and above the solid-state structure (27) with a layer of catalyst (32, 32', 32", etc.) which accelerates the chemical conversion of one gaseous constituent, and the layer or layers of catalyst are arranged, either individually or together, to seal off the gap formed with the material (22) conductive of oxygen ions and with the solid-state structure (27) and each part of the material (22) conductive of oxygen (22) has a separate electrical cable (30, 30', 30", etc., 31).

7. Apparatus according to any of claims 4 to 6, **characterised in that** the solid-state structure (7) contains an oxide or a plurality of oxides of at least one transition metal from periods IV, V, VIII and I of the periodic table of elements.

8. Apparatus according to any of claims 4 to 6, **characterised in that** the solid-state structure (7) comprises one or more metals and one or more oxides.

## Revendications

1. Procédé pour la surveillance en continu de concentrations de constituants gazeux dans des mélanges de gaz, à l'exception de $O_2$, dans lequel la concentration du constituant gazeux est mesurée en continu à l'aide d'au moins une cellule électrochimique comportant au moins une chaîne de corps solides qui contient une matière conduisant les ions oxygène et une structure de corps solides comme électrode contenant un oxyde métallique, et qui produit des signaux électriques dépendant de la concentration du constituant, **caractérisé en ce que**

a) la totalité de la structure de corps solides comme électrode de mesure contenant un oxyde métallique est en contact direct avec la matière conduisant les ions oxygène ; et
b) les signaux de mesure sont évalués électroniquement d'une manière automatique dans un calculateur et convertis en valeurs de concentration, les valeurs calculées étant comparées avec des valeurs correspondantes d'un schéma préalablement introduit dans le calculateur, où la mesure en continu de la concentration du constituant gazeux est effectuée pour éviter des influences gênantes sur le signal de mesure par d'autres constituants du gaz, soit
c) à l'aide d'une cellule électrochimique qui ne présente aucune sensibilité croisée vis-à-vis des constituants du mélange gazeux qui ne sont pas à mesurer, ou
d) à l'aide d'au moins deux cellules électrochimiques séparées l'une de l'autre, montées en opposition, dont l'une au moins contient une substance catalytique du côté du gaz de mesure pour la réaction du constituant avec d'autres constituants du gaz, ou
e) à l'aide d'une cellule électrochimique ayant au moins deux cellules électrochimiques partielles dont au moins une contient une substance catalytique du côté du gaz de mesure pour la réaction du constituant avec d'autres constituants du gaz, et
f) le signal de mesure à évaluer, qui correspond à la concentration du constituant, est, soit formé directement dans le calculateur, soit formé par formation d'une différence entre le signal de la chaîne de corps solides sans catalyseur, qui correspond à la somme des concentrations de tous les constituants du gaz, et le signal de la chaîne de corps solides avec catalyseur, qui correspond à la somme des concentrations de tous les constituants du gaz sans l'espèce ayant réagi sélectivement.

2. Procédé pour la surveillance en continu et la régulation des concentrations de constituants gazeux dans un mélange gazeux, dans lequel des composants gazeux sont introduits dans le mélange gazeux, une partie du composant additionnel étant consommée dans une réaction avec au moins un constituant, la concentration résiduelle du composant introduit ou du constituant à surveiller étant mesurée en continu à l'aide d'au moins une cellule électrochimique comportant au moins une chaîne de corps solides qui contient une matière conduisant les ions oxygène et une structure de corps solides comme électrode contenant un oxyde métallique, et qui produit des signaux électriques dépendant de la concentration résiduelle, **caractérisé en ce que**

a) la totalité de la structure de corps solides est en contact direct avec la matière conduisant les ions oxygène ; et

b) les signaux de mesure sont évalués électroniquement de manière automatique dans un calculateur et convertis en valeurs de concentration, les valeurs calculées étant comparées avec les valeurs correspondantes d'un schéma introduit au préalable dans le calculateur ; et

c) dans le cas d'écarts par rapport au schéma, l'introduction du composant dans le mélange gazeux est régulée automatiquement par le calculateur en fonction de l'importance des différences entre les valeurs calculées et les valeurs du schéma.

3. Procédé selon la revendication 2, **caractérisé en ce qu'**on effectue la mesure en continu de la concentration résiduelle du composant introduit pour éviter des influences gênantes d'autres constituants du gaz sur les signaux de mesure :

a) soit à l'aide d'une cellule électrochimique qui ne présente aucune sensibilité croisée vis-à-vis des constituants du mélange gazeux qui ne sont pas à mesurer, soit

b) à l'aide d'au moins deux cellules électrochimiques séparées l'une de l'autre, montées en opposition, dont l'une au moins contient une substance catalytique du côté gaz de mesure pour la réaction du composant avec d'autres constituants du gaz, soit

c) à l'aide d'une cellule électrochimique ayant au moins deux cellules électrochimiques partielles dont l'une au moins contient une substance catalytique du côté gaz de mesure pour la réaction du composant avec d'autres constituants du gaz, et

d) le signal de mesure à évaluer, qui correspond à la concentration résiduelle du composant, est soit formé directement dans le calculateur, soit formé par différence entre le signal de la chaîne de corps solides sans catalyseur, qui correspond à la somme des concentrations de tous les constituants du gaz, et le signal de la chaîne de corps solides avec catalyseur, qui correspond à la somme des concentrations de tous les constituants du gaz sans l'espèce chimique ayant réagi sélectivement.

4. Dispositif pour la mise en oeuvre du procédé selon la revendication 1 ou 2, qui comprend un calculateur sans ou avec éléments de régulation et une unité de mesure qui se compose d'une ou plusieurs sondes à gaz avec une matière conduisant les ions oxygène, en contact avec le gaz de mesure, comportant des électrodes sur la surface tournée vers le gaz de mesure et la surface détournée du gaz de mesure et les branchements électriques nécessaires pour les signaux produits, dans lequel est disposée sur la surface (3) tournée vers le gaz de mesure de la matière (2) conduisant les ions oxygène, une structure de corps solides (7) comme électrode contenant un oxyde métallique, et la structure de corps solides (7) se compose de composants métalliques et oxydiques, ou de composants oxydiques (8, 9), **caractérisé en ce que**

a) la totalité de la structure de corps solides comme électrode de mesure contenant un oxyde métallique est en contact direct avec la matière conduisant les ions oxygène ; et

b) sur la matière conduisant les ions oxygène (2), aussi bien sur la surface tournée vers le gaz de mesure (5) que sur la surface (3, 4) détournée du gaz de mesure, sont disposées des conducteurs électriques (10, 11).

5. Dispositif selon la revendication 4, **caractérisé en ce que**, dans le cas de plusieurs sondes (1, 1', 1", etc.), au moins une sonde (1') présente sur le côté tourné vers le gaz de mesure (5), sur la structure de corps solides (7), une couche de catalyseur (12) perméable au gaz accélérant la transformation chimique d'un constituant du gaz, qui ferme l'espace intermédiaire à la matière (2) conduisant les ions oxygène et à la structure de corps solides (7).

6. Dispositif selon la revendication 4, **caractérisé en ce que** la sonde (21) présente un élément (23) séparant la matière (22) conduisant les ions oxygène en au moins deux parties, est munie sur le côté tourné vers le gaz de mesure (5), au moins sur une partie de la matière (22) conduisant les ions oxygène, sur la structure de corps solides (27), d'une couche de catalyseur (32, 32', 32" etc.) accélérant la transformation chimique d'un constituant du gaz, et la ou les couche(s) de catalyseur, isolément ou en commun, sont disposées de manière à fermer l'espace intermédiaire à la matière (22) conduisant les ions oxygène et à la structure de corps solides (27), et **en ce que** chaque partie de la matière (22) conduisant les ions oxygène présente un branchement électrique (30, 30', 30" etc., 31) séparé.

7. Dispositif selon l'une des revendications 4 à 6, **caractérisé en ce que** la structure de corps solides (7) contient un ou plusieurs oxydes d'au moins un métal de transition des sous-groupes IV, V, VIII et I de la classification périodique des éléments.

8. Dispositif selon l'une des revendications 4 à 6, **caractérisé en ce que** la structure de corps solides (7) se compose d'un ou plusieurs métaux et d'un ou plusieurs oxydes.

EP 0 241 751 B2

Fig. 1

Fig. 2

Fig. 3

Fig. 4

Fig. 5

Fig. 6

## Fig. 7

## Fig. 8

## Fig. 9

## Fig. 10

## Fig. 11

## Fig. 12

## Fig. 13

## Fig. 14

Fig. 15

Fig. 16

Fig. 17

173a

173b

173c

173d

173e

173f

mV

300

200

100

0

1 | 2 | 3   1 | 2 | 3   1 | 2 | 3   1 | 2 | 3   1 | 2 | 3   1 | 2 | 3

450° → 550° → 650° → 550° → 450° → 350°

Fig. 18

186

187

188

ΔE = 10 mV

t/s   60      30